# EUROPEAN PATENT APPLICATION

(11) **EP 4 759 393 A1**
(43) Date of publication of application: **17.06.2026**
(21) Application number: 24219934.7
(22) Date of filing: 13.12.2024
(51) Int. Cl.: B01D 11/02, B22F 9/20, C06B 33/00, C22B 1/24, C22B 1/243, C22B 3/06, C22B 3/16, C22B 3/46, C22B 5/04, C22B 15/00, C22B 23/02, C22B 34/12, C22B 34/14, C22B 34/22, C22B 34/24, C22B 34/32, C22B 34/34

(54) **PREPARATION OF METALS FROM METAL OXIDE PRECURSORS**

(71) Applicant: Bombadil Holdings LLC, Pittsburgh, PA 15222 (US)
(72) Inventor: Jarvis, David, 0349 Oslo (NO); Jarvis, Rosanna, 0349 Oslo (NO)
(74) Representative: AWA Sweden AB

(57) **Abstract**

There is provided a method and a use of a reducing agent for preparing a metal or an alloy comprising the metal from a metal precursor. The method comprises reacting the metal precursor with the reducing agent in a self-sustaining exothermic reaction to form an intermetallic compound between copper and said metal, sintering said intermetallic compound between copper and said metal together with magnesium and optionally calcium, separating said metal from said intermetallic compound between copper and magnesium by leaching in an acid. There is also provided a method for preparing the reducing agent from a by-product of the method for preparing a metal or an alloy.

## Description

### TECHNICAL FIELD

The present invention relates to the filed of metallurgy, particularly the field of preparing metals from metal oxide precursors.

### BACKGOUND

Metals such as titanium and zirconium, as well as refractory metals, actinides and rare earth metals, for example neodymium, are today essential in many fields of technology. These metals are prepared from refined ores using various processes. Titanium is commercially extracted from refined ores using the Kroll process wherein liquid titanium chloride (TiCl₄) is derived from refined ores and later reduced using magnesium.

Other processes are also known in the art for preparing these elements from refined ores. However, these processes are expensive, as they require special reaction conditions and strong reductants.

Aluminothermic reduction processes for example, uses Aluminium as an active metal mixed with metal oxides precursors derived from refined ores to achieve a reduction reaction wherein oxygen is removed from the metal oxide. However, aluminothermic reduction of refractory and rare earth metal oxides suffers from that the extracted metal, although reduced from oxygen, typically is left alloyed with aluminium. Aluminothermic reduction of Titanium for example, results in the obtained titanium being alloyed with aluminium as well as the formation of intermetallic Titanium Aluminides. This is of course undesirable if one aims for producing pure Titanium. Hence, when aiming for preparing pure metals, the aluminothermic reduction may be performed using an active metal mixture further including metal calcium. Such active metal mixtures limit the amount of aluminium left in the obtained metal. The prior art gives some examples of such active metal mixtures comprising even further metals such as magnesium, sodium or barium. For example, US 2006/0107788 discloses a method for preparing refractory or rare earth metals from metal compounds by reducing them using a reducing agent comprising at least one of calcium, magnesium, sodium, barium or potassium. Similarly, US 7,354,472 discloses a method for preparing a refractory metal from refractory metal oxides, or refractory metal alloys from mixtures of refractory metal oxides, by reducing them using magnesium, calcium, aluminium or mixtures thereof. Also, US Pat. 4,373,947 discloses a process for the preparation of refractory metal alloy powders comprising the steps of mixing of precursor metal oxides and an alkaline oxide or carbonates, calcinating said mixture, and then reducing the mixture using metal calcium.

The active metal mixture used in the reduction should preferably not only contribute to the reduction of the metal oxides during the reduction process. Further key aspects of the reaction mixture are that it should achieve an exothermic reaction which is stable, self-sustaining or at the most only require a moderate heat input for starting and thereafter sustaining the reaction. Some of these aspects are facilitated by having the reaction mixture in the powdered form. Hence, it is desirable that the reaction mixture can be prepared using metals in the powdered form. However, alkali or alkali earth metals such as calcium are notoriously volatile and require careful handling and storage conditions, particularly when in the powdered form. Also, metallic calcium in the powdered form reduces the stability of the reaction which is undesirable. Therefore, metal calcium in reaction processes disclosed in the prior art is often added as larger pieces or chunks. A further negative aspect of self-sustaining exothermic reactions as described above is that the acquired reaction product, for example titanium, is typically the form of a very fine powder. Such fine powders are often flammable, i.e., pyrophoric in air, and require careful handling.

Provided the above, there is a need for improved methods for the reduction of metal oxides which overcomes or at least alleviates some of the shortcomings of the prior art.

### SUMMARY

In view of the above, a general object of the present technology to provide improved methods for the reduction of metal oxides. Especially, it is an object of the present invention to provide a solution to at least some of the problems associated with preparing of metals such as titanium and zirconium from metal oxide precursors.

The invention is set out in the appended set of claims. This summary is provided to introduce a selection of concepts in a simplified form that are further described below in the Detailed Description. In the following, the term 'reduced metal' may be used interchangeably with the term 'the metal'. Also, the term 'metal' is to be understood to include the meaning of 'alloy' unless otherwise specified by terminology such as 'the elemental metal' or the like.

According to a first aspect, the present invention relates to a method for preparing a metal or an alloy comprising the metal from a metal precursor, the method comprising: reacting said metal precursor with a reducing agent in a self-sustaining exothermic reaction to form an intermetallic compound between copper and said metal, and
sintering said intermetallic compound between copper and said metal together with magnesium and optionally calcium, to form a reaction product comprising said metal intermixed with an intermetallic compound between copper and magnesium, and
separating said metal from said intermetallic compound between copper and magnesium by leaching in an acid, preferably in a dilute nitric acid solution, wherein:
   the metal is selected from the group consisting of: Ti, Zr, Hf, V, Nd, Nb, Ta, Cr, Ni, Co, Fe, Mo, W, Sc, U and Th, and
   the metal precursor comprises an oxide comprising said metal, and the reducing agent is a compound defined by the chemical formula Cu(Mg₁₋ₓCaₓ)_{y}, wherein 0 ≤ x ≤1 and 1 ≤ y ≤ 2, or
   a mixture of copper powder, magnesium powder and/or calcium powder, wherein said mixture have a elemental composition corresponding to that of Cu(Mg₁₋ₓCaₓ)_{y}, wherein 0 ≤ x ≤1, and 1 ≤ y ≤ 2, such as Cu(Ca_{0.5}Mg_{0.5})₂.

Accordingly, there is provided a method for preparing a metal or an alloy from a metal precursor, which method comprises the three principal steps of reacting, sintering, and separating according to the above.

The function of the reducing agent during the first step of reacting said metal precursor with said reducing agent is two-fold:
A first function of the reducing agent is that the magnesium and/or calcium of the reducing agent enables a self-sustaining exothermic reaction between the reducing agent and the metal precursor. The heat generated during the exothermic reaction is sufficient to promote further reacting between a remainder of the reducing agent and metal precursor. The metal precursor is reduced during the reaction with the reducing agent, thereby forming a slag comprising magnesium oxide and/or calcium, and a melt of reduced metal. In this context, it is to be understood that the metal is derived from the metal precursor, which metal precursor comprises an oxide of a metal selected from the group consisting of: Ti, Zr, Hf, V, Nd, Nb, Ta, Cr, Ni, Co, Fe, Mo, W, Sc, U and Th.

A second function of the reducing agent is that the copper of the reducing agent dissolves into the melt of the reduced metal, thereby achieving a lowering of the liquidus/solidus of the reduced metal, which in turn prolongs the time for solidification of the reduced metal. The technical effect from this second contribution is that the prolonged time for solidification allows for a further agglomeration of melt before solidification, which in turn limits the formation of submicron particles during the step of reacting. The increased amount of time for agglomeration during the step of reacting is key as it allows the final product of the method according to the invention, i.e., the metal, to have a larger particle size.

A direct consequence of the copper being dissolved into the reduced metal during the step of reacting is the formation of one or more intermetallic compounds between the reduced metal and copper.

According to the above, a material derived from the step of reacting the metal precursor with the reducing agent comprises at least one or more intermetallic compound(s) between the reduced metal and copper, and a slag comprising MgO and/or CaO. The intermetallic compound(s) between the reduced metal and copper formed during said step of reacting can be said to be a first intermediate product of the method, e.g. TiCu and/or Ti₂Cu.

In some embodiment of the method, the step of reacting may include said reducing agent in combination with metal magnesium. In such combination, the metal magnesium can be regarded as a second reducing agent. Addition of magnesium in this way allow for alternative reaction pathways during the step of reacting as addition of magnesium metal, as a second reducing agent according to the above, affects the ratio between copper and magnesium in the reaction mixture.

In the second step of sintering, the intermetallic compound(s) between the metal and copper, i.e., the first intermediate product, is sintered together with magnesium and optionally calcium. During the step of sintering, the intermetallic(s) between the metal and copper decompose into a second intermediate product comprising said metal intermixed with at least one intermetallic compound between copper and magnesium. The material derived from the second step of sintering may comprise said second intermediate product as well as any remaining magnesium, calcium, and slag.

In the third step of separating, the intermixed at least one intermetallic compound between copper and magnesium, and any remaining magnesium, calcium, or slag in the material derived from the step of sintering, is separated from the metal by leaching in dilute acid, preferably in a dilute nitric acid solution. Thereby a final product comprising particles of the metal or alloy, free of any magnesium, calcium, intermetallic compounds, or slag is achieved. Further to the final product comprising the metal, a by-product is derived from the leaching according to the step of separating. This by-product is a solution comprising copper nitrates. This solution of copper nitrates may be recycled for the acquiring of copper for the preparing the compound of the reducing agent according to a further aspect of the invention, this will be described later. The particle sizes of the metal of the final product are typically in a range of 10-500 µm. This range is inherited from the particle sizes of the first intermediate product. Accordingly, the lowering of the solidus/liquidus by the dissolving of copper into the melt of the metal during the first step of reacting, and the associated increase in agglomeration thereby achieved, limits the amount of sub-micron particles in the final product. Thereby, there is provided a method for the preparation of a metal or an alloy which provides said metal or alloy in the form of powder particles having sizes which are typically not pyrophoric. Thereby providing a yield of the metal which is not as flammable and hazardous at ambient condition as yields achieved via aluminothermic reactions known in the art.

Further to the three principal steps described above, the method may further comprise a step of obtaining a reaction mixture by providing and mixing said metal precursor and said reducing agent, wherein said metal precursor, and said reducing agent are provided in powder form.

In some embodiments of the method, the step of obtaining a reaction mixture further includes providing and mixing metal magnesium into the reaction mixture.

The mixing may be achieved by any means known in the art. Said means of mixing may include but is not limited to the use of a ball mill, tumbler or a mortar and pestle. Generally, mixing of metal precursor and reducing agent is beneficial for achieving a complete and uniform reaction between the reducing agent and the metal precursor. The amount of reducing agent relative to the amount of metal precursor in the reaction mixture corresponds to an amount of reducing agent which is required to achieve a complete reduction of the metal precursor. Accordingly, the amount of reducing agent relative to the amount of metal precursor is determined by the stoichiometry of the reaction between the metal precursor and the reducing agent. A surplus of the reducing agent, in view of what is required to achieve complete reduction of the metal precursor, may be provided during the step of obtaining the reaction mixture. Any surplus reducing agent remaining after the step of reacting will be removed during subsequent steps of the method.

The reducing agent is a compound defined by the chemical formula Cu(Mg₁₋ₓCaₓ)_{y}, wherein 0 ≤ x ≤1 and 1 ≤ y ≤ 2. The reducing agent may be one of an intermetallic, an alloy or a metallic glass. Accordingly, the reducing agent may be selected from the group consisting of: CuMg₂, CuCa₂, CuMg and CuCa, or any combination thereof. Alternatively, the reducing agent may be comprised of a mixture of copper powder, magnesium powder and/or calcium powder, wherein said mixture has an elemental composition corresponding to that of Cu(Mg₁₋ₓCaₓ)_{y}, wherein 0 ≤ x ≤1, and 1 ≤ y ≤ 2, such as Cu(Ca_{0.5}Mg_{0.5})₂.

In some embodiments of the method, the metal precursor may comprise a further oxide selected from the group consisting of: TiO₂, TiFeO₃, ZrO₂, HfO₂, V₂O₅, Nd₂O₃, Nb₂O₅ Ta₂O₅, Cr₂O₃, NiO, CoO, MoO₃, WO₃, Sc₂O₃, UO₂ and ThO₂, or combinations thereof. For example, the metal precursor may comprise both TiO₂ and V₂O₅. The metal precursor may also comprise three or more oxides, for example TiO₂, V₂O₅ and ZrO₂. The metal precursor may further be comprised of one or more naturally occurring ores or minerals constituting an oxide comprising one ore more of Ti, Zr, Hf, V, Nd, Nb, Ta, Cr, Ni, Co, Fe, Mo, W, Sc, U and Th. For example, the metal precursor may comprise ilmenite (TiFeO₃), which is an oxide comprising both Fe and Ti. Hence, a metal precursor comprising ilmenite is a metal precursor for both Fe and Ti. A further example is columbite, (FeNb₂O₆), which is an oxide comprising both Fe and Nb. Hence, a metal precursor comprising columbite is a metal precursor for both Fe and Nb. Further examples of ores which may be comprised in the metal precursor includes magnetite (Fe3O4), hematite (Fe2O3), tantalite (FeTa2O6), rutile (TiO2), laterite (NiO), pitchblende (UO2), wolframite (FeWO4), scheelite (CaWO4), molybdite (MoO3) and zircon (ZrSiO4).

The examples provided above are to be recognized as examples only and should not be considered limiting. Accordingly, the composition of the metal precursor may comprise a plurality of metal oxides, ores, or minerals. Hence, the composition of the metal precursor may be tuned to allow the preparing of an alloy instead of an elementally pure metal. Such alloys may be binary, ternary, or quaternary alloy. The prepared alloy may also be a high entropy alloy (HEA).

The reactivity of the reaction mixture may be tailored during the step of obtaining a reaction mixture by further providing and mixing a diluent into the reaction mixture, preferably MgO and/or CaO. Diluents function as moderators of the reactivity of the reaction according to the first step of the method. Any MgO and/or CaO provided into the reaction mixture will be inert during at least the first step of the method and will instead reduce the intensity of the reaction. Reducing the intensity of the reaction may be required to avoid boiling of magnesium during said reacting. The providing of diluents into the reaction mixture is preferred when the combination between the reducing agent and the selected metal precursor are expected to result in a violent reaction. One example of such violent reaction the reaction between magnesium and TiO₂ which is explosive without the presence of a diluent.

After the step of obtaining the reaction mixture, the method may further comprise a step of compressing the reaction mixture into a compact, preferably by compressing at a pressure in a range of 10-200 MPa. This step may also be referred to as briquetting of the reaction mixture. The compact will typically have a cylindrical shape. However, other shapes are possible. Said step of compressing the reaction mixture may be achieved by any means known to the person skilled in the art including but not limited to the use of a die and a plunger together with a hydraulic press.

The step of reacting according to the first step of the method may be achieved by heating said reaction mixture or compact in an inert or evacuated atmosphere, thereby igniting said self-sustaining reaction, preferably the heating is performed at a temperature in a range of 600-1000°C, preferably in a range of 700-900°C, preferably around 800°C. In some embodiments said heating may be uniform, such that the entire reaction mixture or compact is uniformly heated to ignite said reacting. However, the heating can also be local, such that only a portion of the reaction mixture or compact is heated. Local heating may be achieved by, for example, a focused laser. In the case of local heating, the reaction will propagate throughout the reaction mixture or compact, i.e., self-propagate, due to the self-sustaining exothermic nature of the reaction. Heating may for example be achieved by Vacuum Induction Melting (VIM). In a preferred embodiment, said step of reacting is achieved by heating said reaction mixture or compact in an inert or evacuated atmosphere, thereby igniting said self-sustaining exothermic reaction. Heating in an inert or evacuated atmosphere may also, for example, be achieved by Vacuum Induction Melting (VIM).

In some embodiments of the method, the method may comprise an intermediate step of separating said intermetallic compound between copper and said metal, i.e., the first intermediate product, from slag produced during said self-sustaining exothermic reaction. This intermediate step of separating may be achieved by leaching the material derived from the first step of reacting, in an acid or alkali solution. Any alkali or acid solution which dissolves MgO/CaO may be used. However, the selected alkali or acid solution should not affect the metal prepared by the method, or its intermediates, to a detrimental extent. Hence, dilute acetic acid or dilute methanoic acid is preferred. The step of separating the first intermediate product from the slag is preferred as a substantial amount of slag may be formed during the first step of reacting said reducing agent with said metal precursor. To facilitate the leaching according to the above intermediate step of separating, the material derived from the first step of reacting may first be crushed into a powder in a further intermediate step. However, only a moderate crushing is desirable, as an excessive crushing would result in the formation of sub-micron particles of the first intermediate product, i.e., the intermetallic compound(s) between the reduced metal and copper. The formation of such sub-micron particles during said crushing would be undesirable as the particle size of the final product, i.e., the prepared metal, is inherited from the particle sizes of the first intermediate product.

In some embodiments of the method, the second step according to the method, i.e., said step of sintering said intermetallic compound between copper and said metal together with magnesium and optionally calcium, is performed at a sintering temperature in a range of 400-600°C. It is to be understood that the rate of decomposition of the intermetallic between the metal and copper occurs at a faster rate for higher temperatures. Accordingly, higher temperatures are preferred while staying below the melting point of magnesium for safety reasons. As such, a sintering temperature of, for example, 600°C is preferred.

In some embodiments of the method, the step of sintering said intermetallic compound between copper and said metal together with magnesium and optionally calcium includes a ratio between magnesium to calcium in a range of 80-100:0-20, in wt%

In some embodiments of the method, the step of sintering may be followed by an optional intermediate step of crushing the second intermediate product, i.e., said metal intermixed with at least one intermetallic compound between copper and magnesium. The crushing of the second intermediate product facilitates the leaching according to the third step of the method. Like the crushing of the material derived from the first step of the method, an excessive crushing is undesirable, as it too would result in the formation of sub-micron particles. Such sub-micron particles would result in an increased amount of sub-micron particles of the final product, i.e., the prepared metal.

According to a second aspect, the present invention relates to a use of a reducing agent in the reduction of a metal precursor to prepare a metal or metal alloy, wherein the reducing agent is: a compound defined by the chemical formula Cu(Mg₁₋ₓCaₓ)_{y}, wherein 0 ≤ x ≤1, and 1 ≤ y ≤ 2, or a mixture of copper powder, magnesium powder, and/or calcium powder, having an elemental composition corresponding to that of Cu(Mg₁₋ₓCaₓ)_{y}, wherein 0 ≤ x ≤1, and 1 ≤ y ≤ 2, and wherein the metal is selected from the group consisting of: Ti, Zr, Hf, V, Nd, Nb, Ta, Cr, Ni, Co, Fe, Mo, W, Sc, U and Th, and wherein the metal precursor comprises an oxide of the metal.

The benefits and details pertaining to the use of the reducing agent corresponds to the method of preparing a metal according to the first aspect. Hence, reference is made to the above to avoid undue repetition.

According to a third aspect, the present invention relates to a method for preparing a compound defined by the chemical formula Cu(Mg₁₋ₓCaₓ)_{y}, wherein 0 ≤ x ≤1, and 1 ≤ y ≤ 2, comprising the steps of: precipitating copper from an aqueous solution comprising copper nitrates, and melting a respective amount of said precipitated copper, magnesium and/or calcium corresponding to the stoichiometry of Cu(Mg₁₋ₓCaₓ)_{y}, wherein 0 ≤ x ≤1, and 1 ≤ y ≤ 2, to form said compound.

In some embodiments of the method, prior to the precipitating of copper, the aqueous solution from which the copper is precipitated is first neutralized by additions of sodium hydroxide to neutralize any residual nitric acid and bring the solution to pH7.

In some embodiments of method for preparing the compound, the method includes a step of retrieving said copper precipitates from the aqueous solution. Said step of retrieving may be achieved by mean known to a person skilled in the art, for example sedimentation, centrifugation, or filtration.

In some embodiments of method for preparing the compound, said step of precipitating copper from the aqueous solution of copper nitrates comprises adding ascorbic acid to said aqueous solution of copper nitrates.

In some embodiments of the method, said step of precipitating copper from the aqueous solution of copper nitrates comprises adding a polyol, for example glycerol or ethylene glycol, to said aqueous solution of copper nitrates. Alternatively, a hydrazine compound may be added to said aqueous solution of copper nitrates during the step of precipitating copper.

In some embodiments of method for preparing the compound, the method further comprises a step of forming the aqueous solution of copper nitrates by leaching a metal intermixed with an intermetallic between copper and magnesium using nitric acid.

Accordingly, there is provided a method for the preparing of a compound which compound corresponds to the reducing agent according to the first aspect of the invention. The copper for the preparing of said compound is sourced from an aqueous solution of copper nitrate, which aqueous solution corresponds to a by-product derived from the method according to the first aspect of the invention. Hence, the method according to the third aspect enables a circular use of the copper partaking in the reactions of the method according to the first aspect.

A further scope of applicability will become apparent to the skilled person from the detailed description given below. However, it should be understood that the detailed description and specific examples are given by way of illustration only.

### BRIEF DESCRIPTION OF THE DRAWINGS

The invention will be described in detail with reference to the following drawings.
Fig. 1 shows a flow diagram of the method according to the first aspect of the invention.
Fig. 2 show a schematic diagram over the compositional range of the reducing agent according to the invention.
Fig. 3 shows a flow diagram of the method according to the third aspect of the invention.
Fig. 4 shows a flow diagram including the steps of the method according to the first aspect of the invention, and the steps of the method according to the third aspect of the invention.
Fig. 5 Shows chunks of the reducing agent after its preparation.
Fig. 6 Shows an SEM micrograph of a prepared Ti powder.
Fig. 7 Shows an SEM micrograph of copper precipitates which have been precipitated from a liquid filtrate.

### DETAILED DESCRIPTION

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a metal" or "the metal" may include several metals, and the like. Furthermore, the words "comprising", "including", "containing" and similar wordings does not exclude other elements or steps.

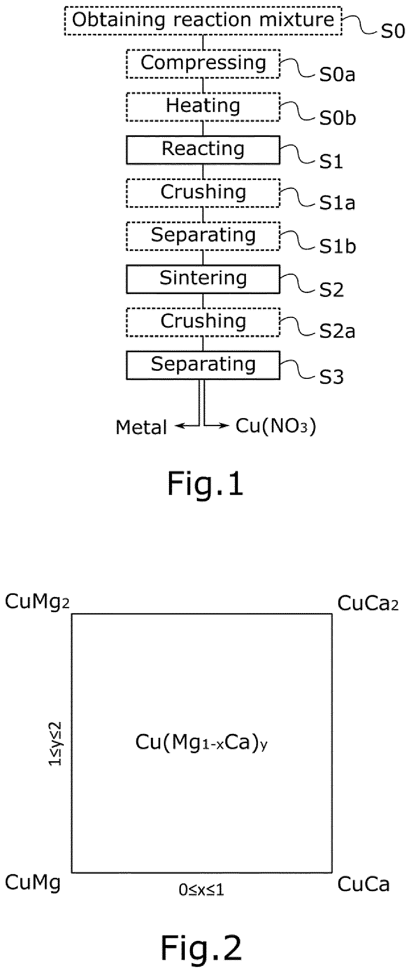

As shown in Fig. 1, the present invention relates to a method for preparing a metal or an alloy comprising metal from a metal precursor.

The method comprises the principal steps of reacting S1, sintering S2, and separating S3. Beginning with the first step of reacting S1, a metal precursor is brought to react with a reducing agent in a self-sustaining exothermic reaction.

The metal precursor comprises an oxide of at least one metal selected from the group consisting of: Ti, Zr, Hf, V, Nd, Nb, Ta, Cr, Ni, Co, Fe, Mo, W, Sc, U and Th.

In some embodiments of the method, the metal precursor may comprise a further oxide selected from the group consisting of: TiO₂, TiFeO₃, ZrO₂, HfO₂, V₂O₅, Nd₂O₃, Nb₂O₅ Ta₂O₅, Cr₂O₃, NiO, CoO, MoO₃, WO₃, Sc₂O₃, UO₂ and ThO₂, or combinations thereof. For example, the metal precursor may comprise both TiOz and V₂O₅. The metal precursor may also comprise three or more oxides, for example TiO₂, V₂O₅ and ZrO₂. These two examples are provided as examples only and should not be considered limiting as any combination of the previously listed oxides are possible. Accordingly, the composition of the metal precursor may comprise a plurality of metal oxides. Hence, the composition of the metal precursor may be tuned to allow the preparing of an alloy instead of an elementally pure metal.

Meanwhile, the reducing agent may be a compound defined by the chemical formula Cu(Mg₁₋ₓCaₓ)_{y}, wherein 0 ≤ x ≤1 and 1 ≤ y ≤ 2. Fig. 2 shows the compositional range of the reducing agent. Accordingly, the reducing agent may, depending on the selected composition, be in the form of an intermetallic, an alloy, a metallic glass or a combination thereof. Accordingly, the reducing agent may comprise discrete intermetallic phases selected from the group consisting of: CuMg₂, CuCa₂, CuMg and CuCa, or any combination thereof. Alternatively, the reducing agent may be comprised of a mixture of copper powder, magnesium powder and/or calcium powder, wherein said mixture of powders has an elemental composition corresponding to that of Cu(Mg₁₋ₓCaₓ)_{y}, wherein 0 ≤ x ≤1, and 1 ≤ y ≤ 2, such as Cu(Ca_{0.5}Mg_{0.5})₂.

Returning to Fig. 1 and the first step of reacting S1, the contribution of the reducing agent during said step of reacting S1 with said metal precursor is two-fold: First, the magnesium and/or calcium of the reducing agent enables a self-sustaining exothermic reaction between the reducing agent and the metal oxide of the metal precursor. The heat generated during the exothermic reaction is sufficient to promote further reacting between a remainder of the reducing agent and metal precursor. The metal precursor is reduced during the reaction with the reducing agent, thereby forming magnesium oxide and/or calcium oxide as a slag, and a melt of reduced metal. Secondly, dissolving of the copper of the reducing agent into the melt of the reduced metal allows for a lowering of the liquidus/solidus of the reduced metal which in turn increases the time for solidification. The technical effect from this later contribution is that the increased time for solidification allows for a further agglomeration of melt before solidification, which in turn limits the formation of submicron particles during the step of reacting S1. A further consequence of the copper being dissolved into the reduced metal is the formation of one or more intermetallic compounds between said reduced metal and copper. Accordingly, the products from the first step of reacting S1 the metal precursor with the reducing agent is at least one or more intermetallic compound(s) between the reduced metal and copper, and a slag comprising MgO and/or CaO. The intermetallic compound(s) between the reduced metal and copper formed during said step of reacting S1 can be said to be a first intermediate product of the method.

Prior to the step of reacting S1, Fig. 1 also shows that the method may further comprise a previous step of obtaining a reaction mixture S0 by providing and mixing said metal precursor and said reducing agent, wherein said metal precursor, and said reducing agent are provided in powder form. The mixing may be achieved by any means known in the art. Said means of mixing may include but is not limited to the use of a ball mill, tumbler or a mortar and pestle. Generally, mixing of metal precursor and reducing agent is beneficial for achieving a complete and uniform reaction between the reducing agent and the metal precursor. The amount of reducing agent relative to the amount of metal precursor corresponds to an amount of reducing agent which is required to achieve a complete reduction of the metal precursor. In other words, a surplus of the reducing agent in view of what is required to achieve complete reduction of the metal precursor may be provided during the step of obtaining the reaction mixture S0. Any surplus reducing agent remaining after the step of reacting S1 will be removed during subsequent steps of the method.

The reactivity of the reaction mixture may be tailored by further providing a diluent during the step of obtaining the reaction mixture S0. The diluent is preferably comprised of MgO and/or CaO₃. Diluents function as moderators of the reactivity of the reaction during the step of reacting S1. Any added MgO and/or CaOs will hence be inert during at least the first step of reacting S1 and will instead reduce the reactivity of the reaction. The providing of diluents into the reaction mixture is preferred when the combination between the reducing agent and the selected metal precursor is expected to result in a violent reaction.

After the step of obtaining the reaction mixture S0, Fig. 1 also shows that the method may further comprise an optional step of compressing S0a the reaction mixture into a compact, preferably by compressing at a pressure in a range of 10-200 MPa. This step may also be referred to as briquetting of the reaction mixture. The compact will typically have a cylindrical shape, all the while other shapes are possible. Said step of compressing the reaction mixture may be achieved by any means known to the person skilled in the art, including but not limited to the use of a die and a plunger together with a hydraulic press.

Fig. 1 also shows that the step of reacting S1 may be achieved by a step of heating S0b said reaction mixture or compact, thereby igniting said self-sustaining reaction. Preferably the heating S0b is performed at a temperature in a range of 600-1000°C, preferably in a range of 700-900°C, preferably around 800°C. In some embodiments said heating S0b may be a uniform heating, such that the entire reaction mixture or compact is uniformly heated to ignite said reaction. However, the heating S0b may also be local, such that only a portion of the reaction mixture or compact is heated. In the case of local heating S0b, the reaction will propagate throughout the reaction mixture or compact, i.e., self-propagate, due to the self-sustaining exothermic nature of the reaction. The heating S0b may for example be achieved by Vacuum Induction Melting (VIM). In a preferred embodiment, said step of reacting S1 is achieved by heating S0b said reaction mixture or compact in an inert or evacuated atmosphere, thereby igniting said self-sustaining exothermic reaction. Heating S0b in an inert or evacuated atmosphere may also, for example, be achieved by Vacuum Induction Melting (VIM).

After the first step of reacting S1, the intermetallic compound(s) between the metal and copper, i.e., the first intermediate product achieved from the step of reacting S1, is sintered together with magnesium and optionally calcium in a second step of sintering S2. During the second step of sintering S2, the intermetallic(s) between the metal and copper decompose into a second intermediate product comprising said metal intermixed with at least one intermetallic compound between copper and magnesium. The step of sintering S2 said intermetallic compound between copper and said metal together with magnesium and optionally calcium, may be performed at a sintering temperature in a range of 400-600°C. It is to be understood that the rate of decomposition of the intermetallic between the metal and copper occurs at a faster rate for higher temperatures. Accordingly, high temperatures are preferred while staying below the melting point of magnesium. As such, a sintering temperature of, for example, 600°C is preferred. The amount of magnesium relative to the amount of the first intermediate product corresponds to an amount of magnesium which is required to achieve a complete decomposition of the intermetallic(s) between copper and said metal. In other words, a surplus of magnesium in view of what is required to achieve complete decomposition may be provided during the step of sintering S2. Any surplus magnesium remaining after the step of sintering S2 will be removed during subsequent steps of the method. The step of sintering S2 said intermetallic compound between copper and said metal together with magnesium and optionally calcium may include a ratio between magnesium to calcium in a range of 80-100:0-20, in wt%.

Fig. 1 also shows that in some embodiments of the method, the method may comprise an optional intermediate step of separating S1b said intermetallic compound between copper and said metal, i.e., the first intermediate product, from slag produced during the step of reacting S1. Said step of separating S1b may be achieved by leaching the material derived from the step of reacting S1 in an acid or alkali solution, preferably in a solution of dilute acetic acid.

The step of separating S1b is preferred as a substantial amount of slag may be formed during the first step of reacting S1 said reducing agent with said metal precursor.

Fig. 1 also shows that, to facilitate the leaching according to the above intermediate step of separating S1b, the material derived from the first step of reacting S1 may, in a further optional intermediate step of crushing S1a, be crushed into a powder, prior to the step of separating S1b. However, only a moderate crushing S1a is desirable, as an excessive crushing S1a would result in the formation of sub-micron particles of the first intermediate product, i.e., the intermetallic compound(s) between the reduced metal and copper. The formation of such sub-micron particles, i.e., particles in the range 10-1000 nm, during said crushing would be undesirable as the particle size of the final product, i.e., the prepared metal, is inherited from the particles of the first intermediate product.

Fig. 1 also shows that, after the step of sintering S2, the metal in the second intermediate reaction product is separated from its intermixed intermetallic compounds between copper and magnesium, and any remaining magnesium, calcium, or slag, in a step of separating S3. Said step of separating S3 is achieved by leaching the second intermediate product, and any remaining magnesium, calcium, or slag, in a dilute acid, preferably in a dilute nitric acid solution. The step of separating S3 results in a final product comprising particles of the metal or alloy, free of any magnesium, calcium, intermetallic or slag. The sizes of the metal or alloy particles thereby achieved, as measured using techniques known to a person skilled in the art are typically in the range of 10-500 µm. Which particle size is inherited from the particle sizes of the first intermediate product.

Fig. 1 also shows that, in some embodiments of the method, the step of separating S3 may be preceded by an optional step of crushing S2a the second intermediate product derived from the step of sintering S2. The crushing S2a of the second intermediate product facilitates the leaching according to the step of separating S3. However, like the optional step of crushing S2a the material derived from the step of reacting S1, an excessive crushing S2a is undesirable, as it too would result in the formation of sub-micron particles. Sub-micron particles are undesirable as that would result in an increased amount of sub-micron particles in the final product, i.e., the prepared metal. Hence, only a moderate crushing S2a is desirable.

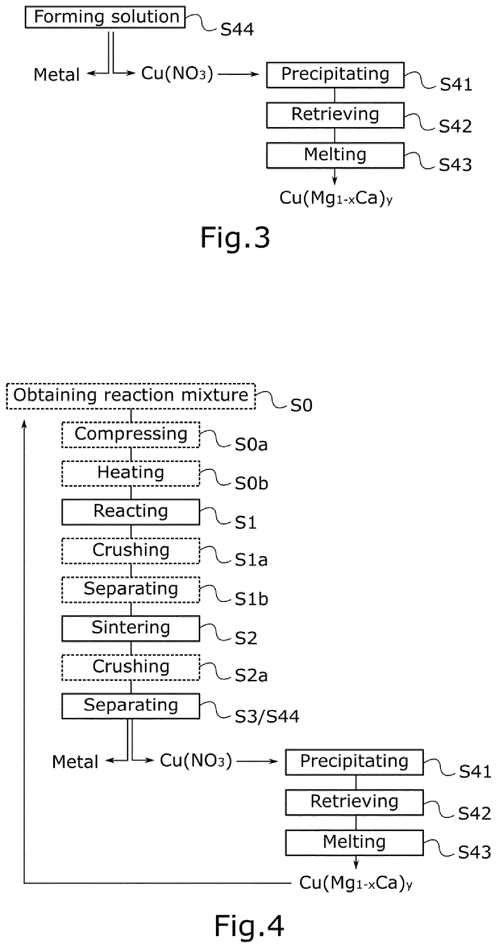

As can be seen in Fig. 1, the third step of separating S3 further provides a by-product comprising a solution of copper nitrates. This solution of copper nitrates may be recycled for the acquiring of copper to be used in a method according to the third aspect of the invention, which method pertains to the preparing of a compound corresponding to the reducing agent provided in the method according to the first aspect. The method of the third aspect of the invention will be discussed with reference to Fig. 3 and 4.

According to the second aspect of the invention, there is also provided a use of a reducing agent in the reduction of a metal precursor to prepare a metal or metal alloy, wherein the reducing agent is:
a compound defined by the chemical formula Cu(Mg₁₋ₓCaₓ)_{y}, wherein 0 ≤ x ≤1, and 1 ≤ y ≤ 2, and wherein the metal is selected from the group consisting of:
Ti, Zr, Hf, V, Nd, Nb, Ta, Cr, Ni, Co, Fe, Mo, W, Sc, U and Th, and wherein the metal precursor comprises an oxide of the metal; or
a mixture of copper powder, magnesium powder, and/or calcium powder, having an elemental composition corresponding to that of Cu(Mg₁₋ₓCaₓ)_{y}, wherein 0 ≤ x ≤1, and 1 ≤ y ≤ 2, and
wherein the metal is selected from the group consisting of:
   Ti, Zr, Hf, V, Nd, Nb, Ta, Cr, Ni, Co, Fe, Mo, W, Sc, U and Th, and wherein the metal precursor comprises an oxide of the metal.

Fig. 3 shows the steps of the method according to the third aspect of the invention. The method according to the third aspect comprises preparing a compound defined by the chemical formula Cu(Mg₁₋ₓCaₓ)_{y}, wherein 0 ≤ x ≤1, and 1 ≤ y ≤ 2, comprising the steps of: precipitating copper S41 from an aqueous solution comprising copper nitrates, and melting S43 a respective amount of said precipitated copper, magnesium and/or calcium corresponding to the stoichiometry of Cu(Mg₁₋ₓCaₓ)_{y}, wherein 0 ≤ x ≤1, and 1 ≤ y ≤ 2, to form said compound.

Fig. 3 also shows that, in some embodiments of the method for preparing the compound, the method may include a step of retrieving S42 said copper precipitates from the aqueous solution after the step of precipitating S41. Said step of retrieving S42 may be achieved by mean known to a person skilled in the art, for example sedimentation, centrifugation, or filtration.

Fig. 3 also shows that, in some embodiments of method for preparing the compound, said step of precipitating copper S41 from the aqueous solution of copper nitrates comprises adding ascorbic acid to said aqueous solution of copper nitrates.

Fig. 3 also shows that in some embodiments of the method for preparing the compound, the method further includes a step of forming the aqueous solution of copper nitrates by leaching metal intermixed with an intermetallic between copper and magnesium using nitric acid.

In Fig. 4 it is shown that the step of forming the aqueous solution S44 according to the third aspect of the invention may be the step of separating S3 according to the method of the first aspect. Fig. 4 also shows that the prepared compound according to the method of the third aspect may be used in the step of obtaining a reaction mixture in the method according to the first aspect.

### EXAMPLES

Example 1 provides an example of preparing Cu(Mg₁₋ₓCaₓ)_{y}, when x=0, and y=2. This example should in no way be interpreted as limiting as x and y may be 0 ≤ x ≤1, and 1 ≤ y ≤ 2.

For the sake of clarity, in the examples following example 1, CuMg₂ is specified as the reducing agent, i.e., Cu(Mg₁₋ₓCaₓ)_{y}, when x=0, and y=2. This should in no way be interpreted as limiting as the reducing agent can be any composition fulfilling the formula Cu(Mg₁₋ₓCaₓ)_{y}, wherein, 0 ≤ x ≤1, and 1 ≤ y ≤ 2.

### Example 1: Preparing the reducing agent

Preparing of the reducing agent, CuMg₂, was achieved by mixing 1 mol of copper metal with 2 mols of magnesium metal to obtain a reaction mixture. The reaction mixture was heated in a steel crucible under inert argon gas. The heating ignited a self-sustaining reaction according to the following reaction formula:

Cu + 2Mg → CuMg₂ (I)

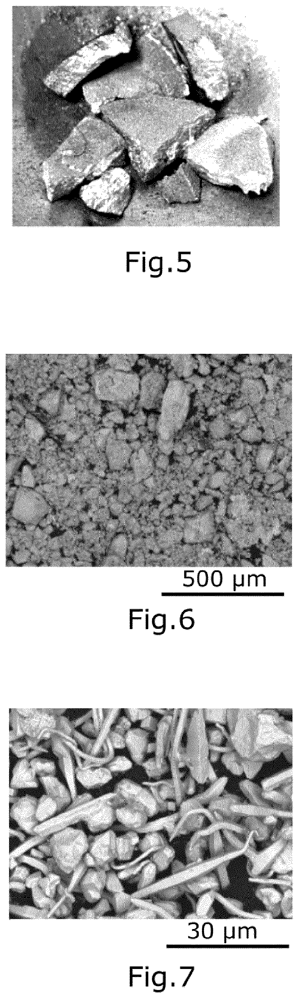

The reaction product comprised intermetallic CuMg₂. The CuMg₂ intermetallic was allowed to cool slowly inside the furnace. The CuMg₂ intermetallic is a shiny, silvery, brittle, non-pyrophoric intermetallic with an orthorhombic crystal structure and a density of 3.5 g/cm³. Chunks of the resulting intermetallic is shown in Fig. 5. Once cooled, the intermetallic ingot was crushed and pulverized to powder having a particle size around 50 µm.

### Example 2: Pure titanium metal

One part TiO₂ powder having a particle size around 1 µm was mixed with one part CuMg₂ intermetallic reductant powder, and some diluent MgO powder. The three powders were mixed in a mortar and pestle machine for 5 minutes to obtain a uniform reaction mixture. The reaction mixture was compressed into a compact using several tonnes of force, resulting in approximately 100 MPa of pressure. The compact was then heated in a crucible under argon, which ignited a reaction at about 700°C. This reaction was self-sustaining, having a controlled propagation of a reaction front through the compact at a rate of approximately 1 cm/s. During the reaction, the magnesium atoms removed the oxygen atoms from neighbouring TiO₂, thereby forming a melt of Ti metal, and MgO as slag. The remaining Cu atoms of the reducing agent dissolved into the melt of Ti metal, thereby lowering its melting point to below 1000°C. This allowed a longer time before a solidification of the melt, thus allowing further agglomeration of droplets to take place, thereby giving TiCu particles having two orders of magnitude larger particle sizes than the initial TiO₂ feedstock powder. The reaction may be described by the following reaction formula:

TiO₂ + CuMg₂ + xMgO → TiCu + (2+x)MgO (I)

The reacted material was allowed to cool before a step of separating, wherein the reacted material leached in a solution of industrial acetic acid (35wt%) for 1 hour. During the leaching, all MgO slag was leached by the acetic acid to form soluble magnesium acetate. The reaction liquid was filtered and washed in a large Buchner filter to separate out the TiCu particles. The TiCu particles were in the order of 100 microns in diameter, non-pyrophoric and had a brown-grey colour when dried.

After cleaning and drying the TiCu powder, it was mixed with magnesium and calcium wherein the ratio between magnesium and calcium was 85:15, in wt%. This mixture was then sintered, in the solid-state, in a crucible for 15 minutes at 450-500°C. The diffusion-based reaction is described by the following reaction formula:

TiCu + 2(Mg,Ca) → Ti + Cu(Mg,Ca)₂ (II)

During the above diffusion-based reaction, the TiCu particles were found to transform into a intermixed microstructure having distinct regions of pure Ti, and intermetallic Cu(Mg,Ca)₂.

The material derived from the sintering was then subjected to a second step of separating, wherein the material was leached in an aqueous solution of nitric acid, typically 2-4M, for 12 hours. The nitric acid attacked both the magnesium, calcium and copper atoms within the Cu(Mg,Ca)₂ intermetallic, thereby forming a water-soluble magnesium/calcium nitrate, and copper nitrate, in a solution, according to the following reaction formula:

Ti + Cu(Mg,Ca)₂ + 6HNO₃ → Ti + 2(Mg,Ca)(NO₃)₂ + Cu(NO₃)₂ + 3H₂ (III)

A large Buchner filter was used to filer out the solid pure Ti particles, and to collect the liquid filtrate comprising copper nitrate and magnesium nitrate. The 50-100 micron-sized pure Ti particles were then washed with water several time to ensure good cleanliness, and then finally dried in air at low temperature to passivate them. Fig. 6 shows an SEM micrograph of the prepared Ti powder.

The remaining liquid filtrate, containing both magnesium/calcium nitrate, and copper nitrate, was found to have a green-blue color, consistent with the presence of Cu²⁺ ions. Sodium hydroxide was added to the solution to neutralize any residual nitric acid and bring the solution to pH7. Then ascorbic acid, C₆H₈O₆, was added to the solution to reduce the Cu²⁺ ions and precipitate out metallic copper according to the following reaction formula:

Cu²⁺ + C₆H₈O₆ → Cu + C₆H₆O₆ + 2H⁺ (IV)

Metallic copper particles precipitated out of the liquid and settled to the bottom of the container under gravity with a good yield. The copper powder was found to be pure Cu, with a characteristic FCC crystal structure in XRD. These copper particles were then filtered out washed and dried. The obtained precipitated copper is shown in Fig. 7. The copper can then be re-used to make fresh batch of the reductant CuMg₂. In this manner, the copper is not consumed in the process, but gets used in a chemical loop.

### Example 3

Another experimental trial was carried out, analogously to that described in example 2, but now with the formation of a Ti₂Cu intermetallic, instead of TiCu, in accordance with the following reaction formulas:

2TiO₂ + CuMg₂ + 2Mg + xMgO -> Ti₂Cu + (4+x)MgO (V)

Ti₂Cu + 2(Mg,Ca) -> 2Ti + Cu(Mg,Ca)₂ (VI)

2Ti + Cu(Mg,Ca)₂ + 6HNO₃ -> 2Ti + 2(Mg,Ca)(NO₃)₂ + Cu(NO₃)₂ + 3H₂ (VII)

Cu²⁺ + C₆H₈O₆ → Cu + C₆H₆O₆ + 2H⁺ (VIII)

Again, this was also found to produce good quality Ti powder in the 50-100 µm range, as well as recyclable copper powder of high purity.

### Example 4

An alloy was achieved by utilizing a metal precursor comprising metal oxides of Ti and Nb, thereby achieving a binary Ti-Nb alloy. In the present example, powders of TiO₂, Nb₂O₅, the CuMg2 reducing agent, and MgO diluent powder, were mixed to obtain a reaction mixture. The reaction mixture was reacted in a self-sustaining reaction, as described in example 2. In the present example, the step of reacting is according to the following reaction formula:

10TiO₂ + ½Nb₂O₅ + 5CuMg₂ +12½Mg + xMgO -> Ti₁₀Cu₅Nb + (22½+x)MgO (IX)

The step of separating the reacted material from MgO slag by leaching in an acetic acid solution, and the step of separating copper from Ti₁₀Cu₅Nb by sintering were performed analogously to example 2, to yield a good quality Ti-Nb alloy powder. The niobium content of 16wt% was found to be uniformly distributed within the Ti particles. XRD revealed alpha-beta crystal peaks, consistent with this composition.

### Example 5

Another example is to produce alloy powders of Ti-Zr for biomedical applications. For example, a binary alloy of TiZr could be produced according to the following reaction formula:

TiO₂ + ZrO₂ + 2CuMg₂ + xMgO -> TiZrCu₂ + (4+x)MgO (X)

The step of separating the reacted material from MgO slag by leaching in an acetic acid solution, and the step of separating copper from TiZrCu₂ by sintering were performed analogously to example 2, to yield a good quality Ti-Nb alloy powder.

### Example 6

A high entropy alloy (HEA) may be derived directly from the method according to the first aspect, wherein a metal precursor comprising a plurality of metal oxides is mixed together with the reducing agent to form a reaction mixture.

In the present example, a quaternary HEA alloy of TiNbTaNi is produced according to the following reaction formula:

2TiO₂ + Nb₂O₅ + Ta₂O₅ + 2NiO + 8CuMg₂ + xMgO ~÷ Ti₂Nb₂Ta₂Ni₂Cu₈ + (16+x)MgO (XI)

The step of separating the reacted material from MgO slag by leaching in an acetic acid solution, and the step of separating copper from Ti₂Nb₂Ta₂Ni₂Cu₈ by sintering were performed analogously to example 2, to yield a good quality TiNbTaNi HEA alloy powder.

### Example 7

In the present example, alloy powders are derived directly from common mineral ores using the method according to the first aspect. For example, a quaternary alloy of Fe₃Nb₂Ti₂ could be produced from ilmenite and columbite ore powder according to the following reaction formula:

2TiFeO₃ + FeNb₂O₆ + 6CuMg₂ + xMgO -> Fe₃Nb₂Ti₂Cu₆ + (12+x)MgO (XII)

The step of separating the reacted material from MgO slag by leaching in an acetic acid solution, and the step of separating copper from Fe₃Nb₂Ti₂Cu₆ by sintering were performed analogously to example 2, to yield a good quality Fe₃Nb₂Ti₂ alloy powder.

### Example 8

Another example involves the synthesis of niobium alloys such as C103, a Nb-Hf-Ti alloy used in high-temperature nozzles and rocket parts. This ternary alloy could be produced according to the method of the first aspect by reacting a metal precursor comprising the oxides for Nb, Hf and Ti, with the reducing agent CuMg₂ according to the following reaction formula:

46Nb₂O₅ + 6HfO₂ + 2TiO₂ + 123CuMg₂ + xMgO → Nb₉₂Hf₆Ti₂Cu₂₃ + (246+x)MgO (XIII)

The step of separating the reacted material from MgO slag by leaching in an acetic acid solution, and the step of separating copper from Nb₉₂Hf₆Ti₂C_{U123} by sintering were performed analogously to example 2, to yield a good quality Nb-Hf-Ti alloy powder.

## Claims

1. A method for preparing a metal or an alloy comprising the metal from a metal precursor, the method comprising:
- reacting said metal precursor with a reducing agent in a self-sustaining exothermic reaction to form an intermetallic compound between copper and said metal; and
- sintering said intermetallic compound between copper and said metal together with magnesium and optionally calcium, to form a reaction product comprising said metal intermixed with an intermetallic compound between copper and magnesium; and
- separating said metal from said intermetallic compound between copper and magnesium by leaching in an acid, preferably in a dilute nitric acid solution;
wherein:
the metal is selected from the group consisting of: Ti, Zr, Hf, V, Nd, Nb, Ta, Cr, Ni, Co, Fe, Mo, W, Sc, U and Th; and
the metal precursor comprises an oxide comprising said metal; and
the reducing agent is an compound defined by the chemical formula Cu(Mg₁₋ₓCaₓ)_{y}, wherein 0 ≤ x ≤1 and 1 ≤ y ≤ 2; or
a mixture of copper powder, magnesium powder and/or calcium powder, wherein said mixture have an elemental composition corresponding to that of Cu(Mg₁₋ₓCaₓ)_{y}, wherein 0 ≤ x ≤1, and 1 ≤ y ≤ 2, such as Cu(Ca_{0.5}Mg_{0.5})₂.

2. The method according to claim 1, further comprising a step of obtaining a reaction mixture by providing and mixing said metal precursor and said reducing agent, wherein said metal precursor, and said reducing agent are provided in powder form.

3. The method according to claim 2, wherein the step of obtaining a reaction mixture further includes providing and mixing a diluent into the reaction mixture, preferably MgO and/or CaO.

4. The method according to claim 2 or 3, wherein the step of reacting is preceded by a step of compressing the reaction mixture into a compact, preferably by compressing at a pressure in a range of 10-200 MPa.

5. The method according to any one of claims 2 to 4, wherein said step of reacting is achieved by heating said reaction mixture or compact in an inert or evacuated atmosphere, thereby igniting said self-sustaining reaction, preferably the heating is performed at a temperature in a range of 600-1000°C, preferably in a range of 700-900°C, preferably around 800°C.

6. The method according to any one of claims 1 to 5, wherein the reducing agent is selected from the group consisting of: CuMg₂, CuCa₂, CuMg and CuCa, or any combination thereof.

7. The method according to any one of claim 1 to 6, wherein in the reducing agent is one of an intermetallic, an alloy or a metallic glass.

8. The method according to any one of claims 1 to 7, wherein said metal precursor comprises a further oxide selected from the group consisting of: TiO₂, TiFeO₃, ZrO₂, HfO₂, V₂O₅, Nd₂O₃, Nb₂O₅ Ta₂O₅, Cr₂O₃, NiO, CoO, MoO₃, WO₃, Sc₂O₃, UO₂ and ThO₂, or combinations thereof.

9. The method according to any one of claims 1 to 8, further comprising a step of separating said intermetallic compound between copper and said metal from slag produced during said self-sustaining exothermic reaction by leaching in an acid or alkali solution, preferably in a solution of dilute acetic acid.

10. The method according to any one of claims 1 to 9, wherein said step of sintering said intermetallic compound between copper and said metal together with magnesium and optionally calcium is performed at a temperature in a range of 400-600°C.

11. The method according to any one of claims 1 to 10, wherein said step of sintering said intermetallic compound between copper and said metal together with magnesium and optionally calcium includes a ratio between magnesium to calcium in a range of 80-100:0-20, in wt%

12. Use of a reducing agent in the reduction of a metal precursor to prepare a metal or metal alloy, wherein the reducing agent is:
- a compound defined by the chemical formula Cu(Mg₁₋ₓCaₓ)_{y}, wherein 0 ≤ x ≤1, and 1 ≤ y ≤ 2; or
- a mixture of copper powder, magnesium powder, and/or calcium powder, having an elemental composition corresponding to that of Cu(Mg₁₋ₓCaₓ)_{y}, wherein 0 ≤ x ≤1, and 1 ≤ y ≤ 2;
and wherein
the metal is selected from the group consisting of: Ti, Zr, Hf, V, Nd, Nb, Ta, Cr, Ni, Co, Fe, Mo, W, Sc, U and Th; and
wherein the metal precursor comprises an oxide of the metal.

13. A method for preparing an compound defined by the chemical formula Cu(Mg₁₋ₓCaₓ)_{y}, wherein 0 ≤ x ≤1, and 1 ≤ y ≤ 2, comprising the steps of:
- precipitating copper from an aqueous solution comprising copper nitrates;
- melting a respective amount of said precipitated copper, magnesium and/or calcium corresponding to the stoichiometry of Cu(Mg₁₋ₓCaₓ)_{y}, wherein 0 ≤ x ≤1, and 1 ≤ y ≤ 2, to form said compound.

14. The method according to claim 13, wherein said step of precipitating copper from the aqueous solution of copper nitrates comprises adding ascorbic acid to said aqueous solution of copper nitrates.

15. The method according to claim 13 or 14, further comprising a step of forming the aqueous solution of copper nitrates by leaching a metal intermixed with an intermetallic between copper and magnesium using nitric acid.
